# EUROPÄISCHE PATENTANMELDUNG

(11) **EP 0 722 662 A1**
(43) Veröffentlichungstag der Anmeldung: **24.07.1996**
(21) Anmeldenummer: 95100869.7
(22) Anmeldetag: 23.01.1995
(51) Int. Cl.: A21C 15/00

(54) **Verfahren und Vorrichtung für das Auftragen von einem oder mehreren Brotaufstrichen**

(71) Anmelder: Broznic, Damir, HR-51218 Jelenje (HR)
(72) Erfinder: Broznic, Damir, HR-51218 Jelenje (HR)
(74) Vertreter: Klunker . Schmitt-Nilson . Hirsch

(57) **Zusammenfassung**

Es wird eine Brotaufstrichmaschine (1) zur Verfügung gestellt, die insbesondere für Großküchen und Restaurants geeignet ist, wobei ein oder mehrere Brotaufstriche automatisch auf eine Brotscheibe aufgetragen wird. Dazu ist ein Vorratsbehälter (2) vorgesehen, der in mehrere Kammern unterteilt ist, wobei die Brotscheibe unter einer mit den Kammern verbundenen Düse (13) hindurchgeschoben wird, und gleichzeitig mit Hilfe eines Dosiermechanismus (4) der Brotaufstrich aus den Kammern durch die Düse (13) auf die unter der Düse (13) hindurch geschobene Brotscheibe aufgetragen wird.

## Beschreibung

Die Erfindung betrifft ein Verfahren und eine Vorrichtung zum Auftragen von einem oder mehreren Brotaufstrichen, geeignet insbesondere für Großküchen und Restaurants.

Das Bestreichen von Brot mit Brotaufstrichen wie Butter und Marmeladen etc. ist relativ zeitaufwendig, wenn dieser Vorgang per Hand üblicherweise mit einem Schmiermesser ausgeführt wird. Dies ist insbesondere problematisch in Großküchen und Restaurants, wo es häufig darauf ankommt, möglichst zügig möglichst viele Brote mit möglichst gleicher Qualität zuzubereiten.

Aufgabe der Erfindung ist es daher, ein Verfahren und eine Vorrichtung zur Verfügung zu stellen, um eine oder mehreren Brotaufstriche auf ein Brot weitgehend automatisch aufzutragen.

Die Aufgabe wird erfindungsgemäß entsprechend den Merkmalen der unabhängigen Ansprüche gelöst.

Die Erfindung geht davon aus, daß es am günstigsten ist, wenn eine Brotscheibe lediglich unter einem geeigneten Vorratsbehälter für einen Brotaufstrich hindurch bewegt wird, wobei der Brotaufstrich aus dem Vorratsbehälter durch eine Düse mittels einem geeigneten Dosiermechanismus auf das Brot aufgetragen wird.

Häufig kommt es vor, daß verschiedene Brotaufstriche gewünscht sind, die entweder auf verschiedenen Broten oder auch gemeinsam auf nur einem Brot aufgetragen werden sollen. So ist es sinnvoll, in einem einzigen Verfahrensschritt sowohl Butter als auch z. B. Marmelade gemeinsam aufzutragen. Aus diesem Grund sieht die Erfindung vor, daß der Vorratsbehälter in mehrere, nebeneinander angeordnete Kammern unterteilt ist, die alle mit der Düse verbunden sind.

Um nun die Mengen des aufzutragenden Brotaufstrichs zu dosieren, ist jeder Vorratsbehälter mit einem Dosiermechanismus ausgestattet. Mit Hilfe dieses Dosiermechanismus wird dafür gesorgt, daß eine gewünschte Menge des Brotaufstrichs auf das unter der Düse hindurch bewegte Brot aufgetragen wird. Diese Dosierung kann per Hand vorgenommen werden, in dem man z. B. mit einem Dosierkolben von oben Druck auf den in den Kammern befindlichen Brotaufstrich ausübt. Jedoch wird der Dosiermechanismus bevorzugter Weise automatisch gesteuert angetrieben.

Die automatische Steuerung kann so gestaltet sein, daß das unter der Düse hindurchgeschobene Brot einen Schalter aktiviert, der einerseits dafür sorgt, daß ein die Düsenöffnung schließender Sperrschieber so verschoben wird, daß er die Düsenöffnung frei gibt, und der andererseits dafür sorgt, daß gleichzeitig mit der Freigabe der Düsenöffnung der genannte Dosiermechanismus angeschaltet wird.

Eine weitere Ausführungsform der Erfindung sieht vor, daß die mit dem Vortatsbehälter verbundene Düse durch mehrere, nebeneinander angeordnete Sperrschieber verschlossen wird, wobei jeder Sperrschieber von einem zugehörigen Schalter aktiviert wird. Durch diese Gestaltung wird sichergestellt, daß die von den aktivierten Sperrschiebern freigegebene Öffnungsbreite der Düse genau der Breite der unter Düse hindurch geschobenen Brotscheibe entspricht.

Im folgenden wird die Erfindung anhand der begleitenden Figuren 1 bis 5 genauer beschrieben werden.
- Figur 1: zeigt eine schematische Darstellung einer erfindungsgemäßen Brotaufstrichmaschine mit drei Vorratsbehältern von vorne;
- Figur 2: zeigt eine schematische Darstellung der Brotaufstrichmaschine aus Figur 1 von der Seite;
- Figur 3: zeigt als Teilausschnitt der Brotaufstrichmaschine aus Figur 1 die Düseneinrichtung und die drei Vorratskammern;
- Figur 4: zeigt einen Dosiermechanismus für die Vorratsbehälter;
- Figur 5: zeigt eine Antriebseinrichtung für den Dosiermechanismus nach Figur 4.

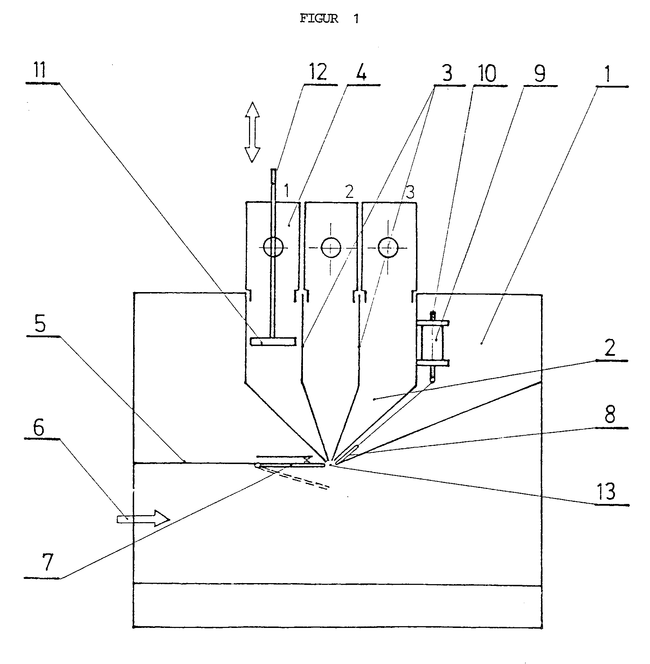

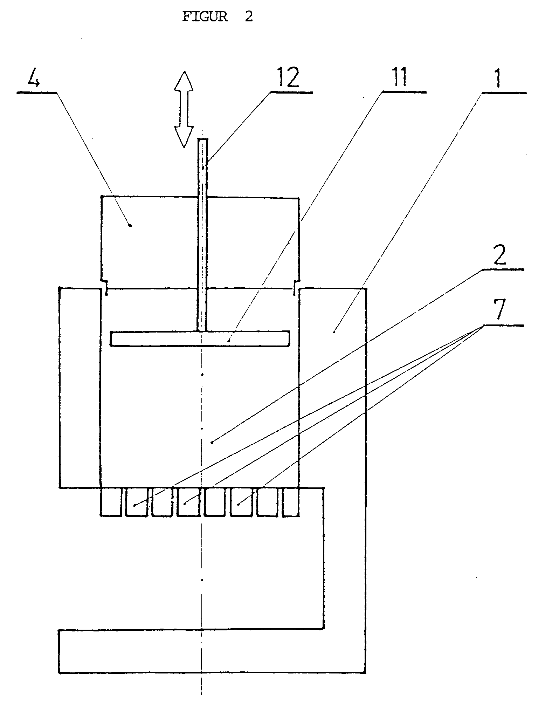

Figuren 1 und 2 zeigen in schematischer Weise eine erfindungsgemäße Brotaufstrichmaschine 1, die in diesem Falle mit drei Kammern mit verschiedenen Brotaufstrichen ausgestattet ist.

Die Kammern werden dadurch gebildet, daß der Vorratsbehälter 2 mit zwei Trennwänden 3 versehen ist, so daß sich drei voneinander getrennte Kammern bilden.

Der Vorratsbehälter 2 ist, wie in Figur 2 deutlich zu sehen, an einem U-Gestell aufgehängt, so daß eine Brotscheibe in Richtung des Pfeils 6 unter dem Vorratsbehälter hindurchgeschoben werden kann. Dieser Vorgang kann selbstverständlich auch automatisiert werden.

Wenn eine Brotscheibe 6 unter der Düse 13 des Vorratsbehälters hindurchgeschoben wird, so wird von der Brotscheibe ein Schalter 7 nach oben gedrückt und in Kontaktstellung gebracht, wobei dieser Schalter 7 unmittelbar vor (oder hinter) der Düse 13 an einer Oberfläche 5 der Brotaufstrichmaschine 1 angebracht ist. Wie in Figur 2 zu sehen, sind mehrere Schalter 7 nebeneinander angeordnet, so daß die Breite der hindurch geschobenen Brotscheibe die Zahl der aktivierten Schalter 7 bestimmt.

Die Aktivierung eines Schalters 7 bewirkt, daß ein zugeordneter Sperrschieber 8, der normalerweise vor der Düse 13 in Schließposition angeordnet ist, in Freigabeposition bewegt wird. Dies wird erreicht, indem jeder Schalter 7 mit einem Elektromagneten 9 derart verbunden ist, daß der Anker 10 des Elektromagneten 9 verschoben wird, wenn der Schalter 7 aktiviert wird. Verbunden mit dem Anker 10 des Elektromagneten 9 ist der Sperrschieber 8, der im nicht-aktivierten Zustand des Schalters 7 einen Teil der Düse 13 verschließt, und bei der Aktivierung des Schalters 7 durch die Bewegung des Ankers 10 von der Düse 13 wegbewegt wird, so daß er einen entsprechenden Bereich der Düsenöffnung freigibt.

Figur 1 zeigt die Brotaufstrichmaschine 1 mit aktiviertem Schalter 7, wobei der Spertschieber 8 durch den Anker 10 in seine Freigabeposition verschoben worden ist. Gestrichelt ist die Position des Schalters 7 dargestellt, die dieser einnimmt, wenn kein Brot unter dem Vorratsbehälter 2 hindurchgeschoben wird.

Selbstverständlich ist es sinnvoll, die Ebene auf der die Brotscheibe unter dem Vorratsbehälter 2 hindurch geschoben wird, in ihrer Höhe justierbar zu gestalten, so daß unabhängig von der Brotdicke eine Aktivierung des oberhalb angeordneten Schalters 7 erfolgen kann. Anders als in der Ausführungsform dargestellt, kann es auch sinnvoll sein, den Schalter 7 auf der Ebene selbst anzubringen, z. B. direkt unterhalb der Düsenöffnung.

Der Schalter 7 aktiviert nicht nur den Elektromagneten 9, sondern auch die Dosiermechanismen 4, wobei für jede Kammer des Vorratsbehälters 2 ein eigener Dosiermechanismus 4 vorgesehen ist. Die Dosiermechanismen 4 sind über den Kammern angeordnet, und sie treiben jeweils einen Kolben 11 über eine Spindel 12 an, so daß sich der Kolben 11 abwärts bewegt und dadurch den in der Kammer befindlichen Brotaufstrich durch die Düse 13 auf das unter der Düse bewegte Brot drückt. Bevor allerdings das Brot unter der Düse 13 hindurch geschoben wird, wird über einen gesonderten Schalter, der nicht dargestellt ist, ausgewählt, welche der Dosiermechanismen tatsächlich aktiviert werden sollen, so daß entsprechend nur der oder die ausgewählten Brotaufstriche auf das Brot aufgetragen werden.

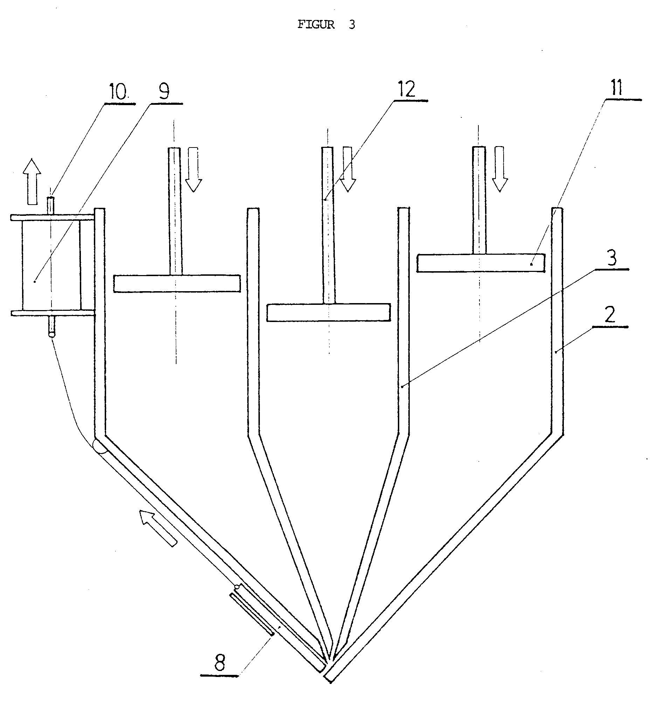

Figur 3 zeigt nocheinmal im Detail den Düsenaufbau des Vorratsbehälters 2. Es wird deutlich, daß der Vortatsbehälter 2 mehrere Trennwände (3) besitzt, die mit dem Vorratsbehälter 2 im tiefstgelegenen Punkt nahezu aneinandergrenzen, so daß lediglich geringe Spaltöffnungen bleiben, die die Düse 13 formen. Vor der Düse 13 ist der Sperrschieber 8 angebracht, der durch den Anker 10 des Elektromagneten 9 in eine geöffnete Stellung gebracht werden kann. Außerdem sieht man, daß die mit den Spindeln 12 verbundenen Dosierkolben 11 im wesentlichen der Form der Kammern entsprechen. Der Dosierkolben 11 wird über den zugehörigen Dosiermechanismus 4 zur selben Zeit aktiviert, wie der für die Öffnung des Sperrschiebers 8 zuständige Elektromagnet 9, so daß die Kolben 11 durch ihre Abwärtsbewegung den in der entsprechenden Kammer befindlichen Brotaufstrich durch die Düse 3 hindurch drücken können.

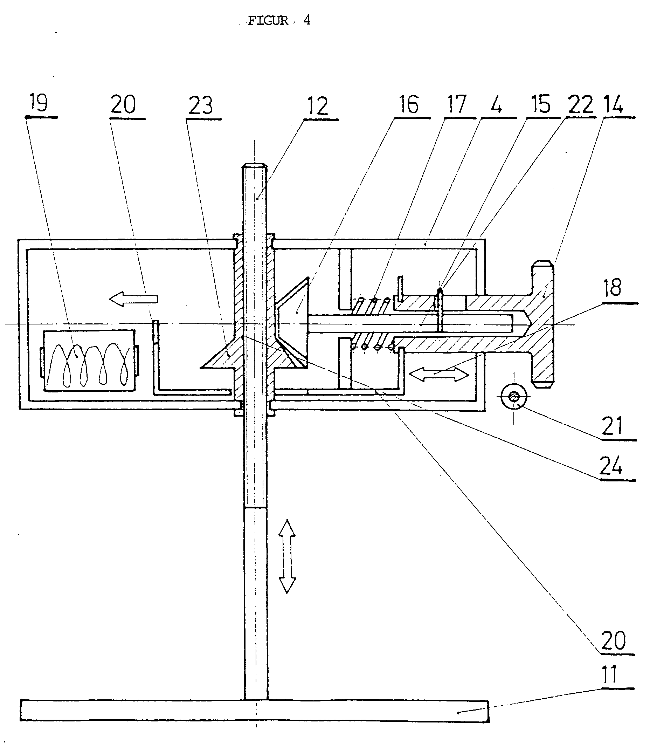

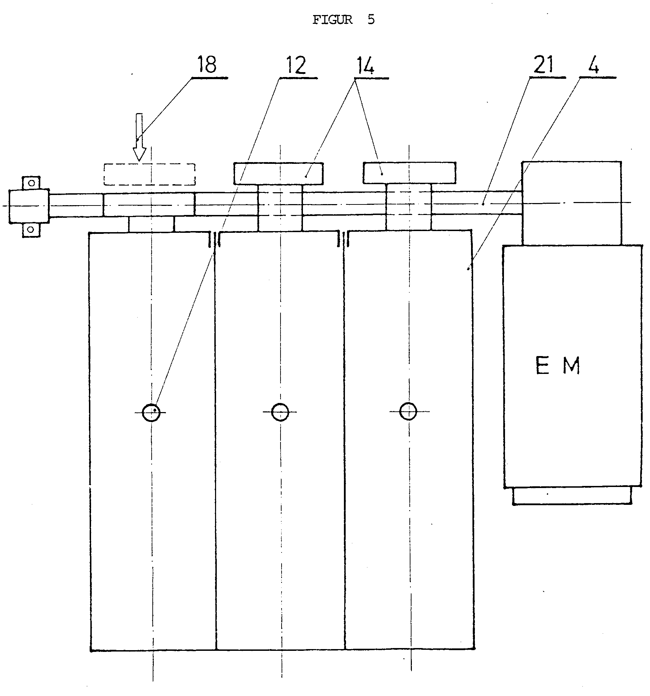

Die Figuren 4 und 5 zeigen den allgemeinen Antriebsmechanismus und den Dosiermechanismus 4, mit dem der Kolben 11 in Bewegung gesetzt wird.

Figur 5 zeigt einen Elektromotor EM, der eine Antriebsspindel 21 antreibt. Der Elektromotor EM kann entweder von Hand eingeschaltet werden, wenn die Brotaufstrichmaschine in Benutzung genommen wird, oder aber auch automatisch durch die Aktivierung des Schalters 7.

Mit der Antriebsspindel 21 können Zahnräder 14 in Verbindung gebracht werden, wobei für jeden Dosiermechanismus 4 ein Zahnrad 14 vorgesehen ist. Die Drehachsen der Zahnräder 14 stehen senkrecht zur Drehachse der Antriebsspindel, und die Zahnräder 14 können entlang ihrer Drehachsen in die mit 18 markierte Richtung verfahren werden, um sie mit der Antriebsspindel 21 in Wirkverbindung zu setzen. Der Mechanismus zum Verfahren eines Zahnrads 14 ist im Gehäuse des Dosiermechanismus 4 untergebracht, wie in Figur 4 gezeigt. Demzufolge wird ein Elektromagnet 19 aktiviert, wenn der Schalter 7 durch eine unter der Düse hindurch geführte Brotscheibe aktiviert wird. Der aktivierte Elektromagnet 19 zieht einen verschiebbar montierten Träger 20 an, an dem ein mit dem Zahnrad 14 verbundener Schaft so befestigt ist, daß der Schaft mit dem Zahnrad 14 durch die von dem aktivierten Elektromagneten 19 verursachte Bewegung des Trägers 20 in Richtung 18 der Drehachse des Zahnrades 14 verschoben wird, so daß das Zahnrad 14 mit der Antriebsspindel 21 in Wirkverbindung tritt. In diesem Zustand dreht sich das Zahnrad 14 um seine Drehachse und mittels einem Mitnehmer 22 wird die Rotation des Zahnrades 14 auf einen Schaft 15 eines Kegelrades 16 übertragen. Das so in Rotation versetzte Kegelrad 16 ist ständig mit einem rechtwinklig dazu angeordneten Kegelrad 23 in Wirkverbindung. Die Kegelradverbindung 16, 23 bewirkt, daß die Rotation des Zahrades 14 um eine horizontale Drehachse in eine Rotation um eine vertikale Drehachse umgesetzt wird. Das ortsfest gelagerte Kegelrad 23 besitzt ein Durchgangsgewinde entlang seiner vertikalen Drehachse, in dem eine Spindel 12 mit einem daran befestigen Dosierkolben 11 angeordnet ist. Auf diese Art wird die Rotation des Kegelrads 23 in eine Translationsbewegung der senkrecht angeordneten Spindel 12 umgesetzt, so daß der Kolben sich nach oben bewegt und den Brotaufstrich aus dem Vortatsbehälter 2 durch die Düse 13 auf das Brot drückt.

Sobald der Mikroschalter 17 nicht mehr aktiviert ist, schaltet der Elektromagnet 19 automatisch ab, so daß der Träger 20 mit dem Zahnrad 14 mit Hilfe einer Vorspannfeder 17 in Richtung des Pfeils 18 verschoben wird, so daß das Zahnrad 14 nicht mehr mit der Antriebsspindel 21 des Elektromotors EM in Eingriff steht. Der Dosiermechanismus schaltet sich also automatisch ab.

Zwar bewirkt die Aktivierung eines beliebigen Schalters 7 zunächst einmal die Aktivierung aller Dosiermechanismen 4, jedoch gibt es mehrere Gestaltungsvarianten, um sicherzustellen, daß nur der Dosiermechanismus 4 aktiviert wird, der einem ausgewählten Brotaufstrich entspricht. Zum einen ist es möglich, für die Elektromagneten 19 eines jeden Dosiermechanismus 4 einen gesonderten Ein-Aus-Schalter vorzusehen, so daß nur diejenigen Elektromagneten 19 durch Aktivierung des Schalters 7 eingeschaltet werden, bei denen der Ein-Aus-Schalter eingeschaltet ist. Es ist aber genauso gut möglich, in jedem Dosiermechanismus 4 z. B. einen Hebel vorzusehen, mit dem z. B. die Verschiebung des Trägers 20 verhindert werden kann, so daß durch Aktivierung des Schalters 7 nur diejenigen Zahnräder 14 von den aktivierten Elektromagneten 19 in Eingriffsposition mit der Antriebsspindel 21 gebracht werden, bei denen der Träger 20 nicht durch einen solchen Hebel gesperrt ist. Diese Ausgestaltungen sind hier nicht dargestellt.

Schließlich kann die Abtriebssdrehzahl des Elektromotors noch einstellbar ausgeführt sein, um den Brotaufstrichausstoß an die von den Sperrschiebern 8 freigegebene Breite der Düse 13 anzupassen.

## Patentansprüche

1. Verfahren zum Auftragen von einem oder mehreren Brotaufstrichen, **dadurch gekennzeichnet**, daß eine Brotscheibe unter einer Düse (13) eines Vortatsbehälters (2), der einen oder mehrere durch Trennwände (3) voneinander getrennte Kammern mit Brotaufstrich enthält, hindurchbewegt wird, wobei gleichzeitig mit dem Hindurchbewegen der Brotscheibe ein oder mehrere den Kammern zugeordnete Dosiermechanismen (4) betätigt werden, mit denen entsprechend ein oder mehrere Brotaufstriche aus den Kammern herausgedrückt und durch die Düse (13) auf die darunter befindliche Brotscheibe aufgetragen werden.

2. Verfahren nach Anspruch 1, **dadurch gekennzeichnet,** daß die Dosiermechanismen (4) automatisch aktiviert werden, wenn die Brotscheibe unter der Düse (13) herbewegt wird, indem ein in unmittelbarer Nähe zur Düse (13) angeordneter Schalter (7), der mit den Dosiermechanismen (4) in Verbindung steht, von der Brotscheibe aktiviert wird.

3. Verfahren nach Anspruch 2, **dadurch gekennzeichnet,** daß mit dem Aktivieren des Schalters (7) ein dem Schalter (7) zugeordnetes, beweglich vor der Düse (13) angeordnetes Sperrelement (8), veranlaßt wird, sich in eine Freigabeposition zu bewegen, um die Düse (13) für den Austritt des Brotaufstrichs freizugeben.

4. Verfahren nach Anspruch 1 oder 2, **dadurch gekennzeichnet,** daß mit dem Hindurchbewegen der Brotscheiben mehrere, nebeneineinder angeordnete Schalter (7) betätigt werden, die jeweils ein zugeordnetes, in Bewegungsrichtung der Brotscheibe auf einer Linie mit dem Schalter (7) angeordnetes bewegliches Sperrelement (8) veranlassen, sich in Freigabeposition zu bewegen.

5. Vorrichtung zum Auftragen von einem oder mehreren Brotaufstrichen, **dadurch gekennzeichnet,** daß ein Gehäuse (1) mit einem Vorratsbehälter (2) für ein oder mehrere durch Trennwände (3) voneinander getrennte Brotaufstriche vorgesehen ist, wobei der Vorratsbehälter (2) an seinem unteren Ende eine Düse (13) aufweist, die für den Austritt der Brotaufstriche auf eine unter der Düse (13) hindurchbewegte Brotscheibe geeignet ist, und jede der durch die Trennwände (3) im Vorratsbehälter (2) gebildeten Kammern einen Dosiermechanismus (4) besitzt, der geeignet ist, den Brotaufstrich durch die Düse (13) hindurch auf die Brotscheibe zu drücken.

6. Vorrichtung nach Anspruch 5, **dadurch gekennzeichnet,** daß in Bewegungsrichtung der Brotscheibe in unmittelbarer Nähe zur Düse (13) ein Schalter (7) angeordnet ist, der durch die Gegenwart der Brotscheibe aktiviert werden kann, und der mit den Dosiermechanismen (4) so in Verbindung steht, daß durch Aktivieren des Schalters (7) automatisch die Dosiermechanismen (4) aktiviert werden.

7. Vorrichtung nach Anspruch 6, **dadurch gekennzeichnet,** daß an jeder Dosiereinrichtung (4) ein Sperrmechanismus vorgesehen ist, der geeignet ist, das automatische Aktivieren der Dosiermechanismen (4) zu verhindern.

8. Vorrichtung nach einem der Ansprüche 5 bis 7, **dadurch gekennzeichnet,** daß der Schalter (7) desweiteren mit einem dem Schalter (7) zugeordneten, beweglich vor der Düse (13) angeordneten Sperrelement (8), so in Verbindung steht, daß sich das Sperrelement (8) in eine Freigabeposition bewegt, wenn der Schalter (7) aktiviert ist.

9. Vorrichtung nach einem der Ansprüche 5 bis 7, **dadurch gekennzeichnet,** daß mehrere Schalter (7) nebeneinander angeordnet sind, wobei die Schalter (7) jeweils mit einem zugeordneten, in Bewegungsrichtung der Brotscheibe auf einer Linie mit dem Schalter (7) angeordneten beweglichen Sperrelement (8) so in Verbindung stehen, daß sich ein Sperrelement (8) in eine Freigabeposition bewegt, wenn der zugeordnete Schalter (7) aktiviert ist.

10. Vorrichtung nach einem der Ansprüche 6 bis 9, **dadurch gekennzeichnet,** daß die Dosiermechanismen (4) jeweils einen Elektromagneten (19) aufweisen, der über den Schalter (7) aktiviert werden kann, und der im aktivierten Zustand einen beweglich angeordneten Träger (20) mit einem daran ortsfest aber drehbar gelagerten Zahnrad (14) in einer Position hält, in der das Zahnrad (14) das von einem Elektromotor (EM) übertragene Antriebsmoment von einer Antriebsspindel (21) über einen Mitnehmer (15), eine damit verbundene Kegelradanordnung (16,21) und ein Spindelgetriebe (12,20) in eine Transversalbewegung der senkrecht angeordneten Spindel (12) mit daran befestigtem Dosierkolben (11) umwandelt.

11. Vorrichtung nach einem der Ansprüche 8 bis 10, **dadurch gekennzeichnet,** daß der Sperrschieber (8) mit dem zugeordneten Schalter (7) über einen Elektromagneten (9) verbunden ist, wobei der Elektromagnet (9) einen Tauchkolben (10) aufweist, der sich im Elektromagneten (9) auf und ab bewegen kann und der direkt mit dem Sperrschieber (8) verbunden ist.
